**Europäisches Patentamt**

**European Patent Office**

**Office européen des brevets**

(19)

(11) Numéro de publication : **0 363 280 B1**

## (12) FASCICULE DE BREVET EUROPEEN

(45) Date de publication du fascicule du brevet :
**26.02.92 Bulletin 92/09**

(51) Int. Cl.$^5$ : **F01D 5/30**

(21) Numéro de dépôt : **89402737.4**

(22) Date de dépôt : **04.10.89**

(54) **Rotor de turbomachine muni d'un dispositif de fixation des aubes.**

(30) Priorité : **05.10.88 FR 8813004**

(43) Date de publication de la demande :
**11.04.90 Bulletin 90/15**

(45) Mention de la délivrance du brevet :
**26.02.92 Bulletin 92/09**

(84) Etats contractants désignés :
**DE FR GB**

(56) Documents cités :
**EP-A- 0 213 055
CH-A- 289 173
FR-A- 1 136 390
FR-A- 1 227 171
GB-A- 745 073
GB-A- 2 089 899
US-A- 4 076 455**

(73) Titulaire : **SOCIETE NATIONALE D'ETUDE ET
DE CONSTRUCTION DE MOTEURS
D'AVIATION, "S.N.E.C.M.A."
2, Boulevard du Général Martial Valin
F-75015 Paris (FR)**

(72) Inventeur : **Hacault, Michel, Gérard, Paul
15, rue Joliot Curie
F-91300 Massy Villaine (FR)**
Inventeur : **Heurtel, Bertrand, Jean, Joseph,
Marie
12, rue de l'Arc
F-77240 Vert Saint Denis (FR)**
Inventeur : **Serre, Jacques, René
2 Allée des Pervenches
Vaux Le Penil F-77000 Melun (FR)**

(74) Mandataire : **Berrou, Paul et al
S.N.E.C.M.A. Service des Brevets Boîte
Postale 81
F-91003 Evry Cedex (FR)**

EP 0 363 280 B1

Jouve, 18, rue Saint-Denis, 75001 PARIS

## Description

La présente invention concerne un rotor de turbomachine muni d'un dispositif de fixation des aubes.

Divers moyens sont couramment utilisés pour assurer la fixation et la rétention radiale des aubes mobiles montées sur des roues ou rotors des turbomachines modernes à vitesses élevées de rotation. Il est notamment habituel de prévoir des aubes constituées d'une pale proprement dite dont les formes aérodynamiques assurent les performances recherchées d'un étage de compression ou de turbine, associées à une embase comportant un pied éventuellement surmonté d'une plate-forme délimitant la paroi interne de la veine de circulation des gaz. Ce pied, présentant, par exemple, une forme dite marteau ou encore en sapin, est placé dans une rainure axiale coopérante ménagée sur la jante d'un disque de roue ou sur le diamètre externe d'un tambour de rotor. Dans certains cas, le montage prévu peut également être dans un sens périphérique ou circulaire. Dans tous les cas, des moyens complémentaires assurent habituellement un verrouillage des aubes dans les différentes directions, radiale, axiale et périphérique.

Ces solutions antérieures, bien connues et encore largement utilisées, notamment dans les applications aéronautiques tant dans le domaine militaire que dans le domaine civil, ne sont pas toutefois pleinement satisfaisantes dans des applications aux moteurs aéronautiques de nouvelle conception, notamment celle qui associe au générateur de gaz, une turbine supplémentaire de puissance à vitesse lente de rotation, destinée à entraîner soit une soufflante soit une hélice, et combinant notamment deux étages contrarotatifs. Du fait notamment de la réduction des vitesses de rotation et donc aussi du niveau de contrainte auquel les pièces en rotation sont soumises, un allègement des technologies précédemment utilisées s'avère utile. Cet objectif de légèreté s'accompagne d'une recherche de simplification, de manière notamment à rendre le montage plus aisé. Enfin, compte-tenu des nouvelles conditions d'utilisation, des qualités de bon maintien des pièces à basse vitesse de rotation du rotor doivent être obtenues.

Certains éléments de solution qui se révèlent cependant insuffisants peuvent être fournis par des dispositions plus anciennes n'ayant pas atteint le degré de complexité et de sophistication de certaines solutions plus récentes et à l'heure actuelle mieux connues. Ainsi, US A 2 654 565 décrit le montage d'aubes dont l'embase comporte des épaulements formant crochets associés à des fentes ménagées sur les jantes de disques assemblés pour former un rotor. US A-3 063 674 montre l'utilisation de rivets pour la fixation d'aubes de rotor. FR-A-1227171 décrit les aubes ayant deux brides cooperant avec les brides d'un tambour d'un rotor.

Conformément à l'invention, un rotor de turbomachine constituant une solution satisfaisante aux problèmes évoqués ci-dessus est caractérisé en ce que une bride de tambour située du côté aval comporte une rangée de perçages régulièrement espacés et à sa base, une gorge annulaire, en ce que chaque bride aval coopérante de plate-forme d'aube comporte également un perçage, en ce que lesdits perçages coopérants sont traversés par un pion aval de forme générale cylindrique comportant, en son milieu, une collerette transversale intercalée entre les deux dites brides aval et, du côté aval, une gorge annulaire, et en ce que des segments festonnés ayant leur base radialement inférieure placée dans ladite gorge annulaire de bride, ont une de leurs dents séparant deux échancrures logée dans ladite gorge de pion et portent à chacune de leurs extrémités une languette, l'une droite, l'autre pliée à angle droit, de manière à assurer la rétention radiale, axiale et tangentielle des aubes de rotor, desdits pions et desdits segments et, par redressage de cette dernière languette, derrière un desdits pions, le verrouillage de l'ensemble.

L'invention proposé également divers modes avantageux de réalisation, notamment dans le cas où deux pales d'aube sont portées par une plate-forme commune, l'ensemble constituant un secteur d'aubes de rotor. Ainsi, la bride amont de tambour peut comporter un évidement annulaire formant une section en crochet coopérant avec un crochet orienté vers l'avant et porté par la bride amont de plate-forme d'aube.

Ou, selon l'application envisagée, la bride amont du tambour comporte une rangée de perçages, régulièrement espacés et la bride amont coopérante de plate-forme comporte également un perçage, les deux perçages correspondants, respectivement de tambour et de plate-forme, recevant un pion amont, de forme générale cylindrique, comportant en son milieu une collerette transversale, intercalée entre les deux dites brides amont.

D'autres caractéristiques et avantages de l'invention seront mieux compris à la lecture de la description qui va suivre de deux modes de réalisation de l'invention, en référence aux dessins annexés sur lesquels :

– la figure 1 représente, selon une vue schématique en perspective, un secteur d'aubes constituant un rotor de turbomachine conforme à l'invention, suivant un premier mode de réalisation ;

– la figure 2 représente, selon une vue partielle schématique, en coupe longitudinale par un plan passant par l'axe de rotation du rotor, le secteur d'aubes représenté sur la figure 1, fixée sur le tambour de rotor ;

– les figures 3a, 3b et 3c montrent trois étapes du montage des segments de verrouillage du secteur d'aubes lors de sa fixation sur le tambour de rotor dont le résultat final est représenté sur la figure 2 ;

– la figure 4 représente, selon une vue partielle schématique, analogue à celle de la figure 2, en coupe longitudinale par un plan passant par l'axe de rooation du rotor, un rotor de turbomachine conforme à l'invention, suivant un deuxième mode de réalisation ;

– la figure 5 montre, selon une vue partielle en perspective, les détails agrandis des moyens de fixation des aubes sur le tambour du rotor, représenté sur la figure 4 ;

– les figures 6a, 6b et 6c, montrent trois étapes du montage des aubes sur le tambour du rotor correspondant aux étapes représentées sur les figures 3a, 3b, et 3c, pour le deuxième mode de réalisation représenté sur la figure 4.

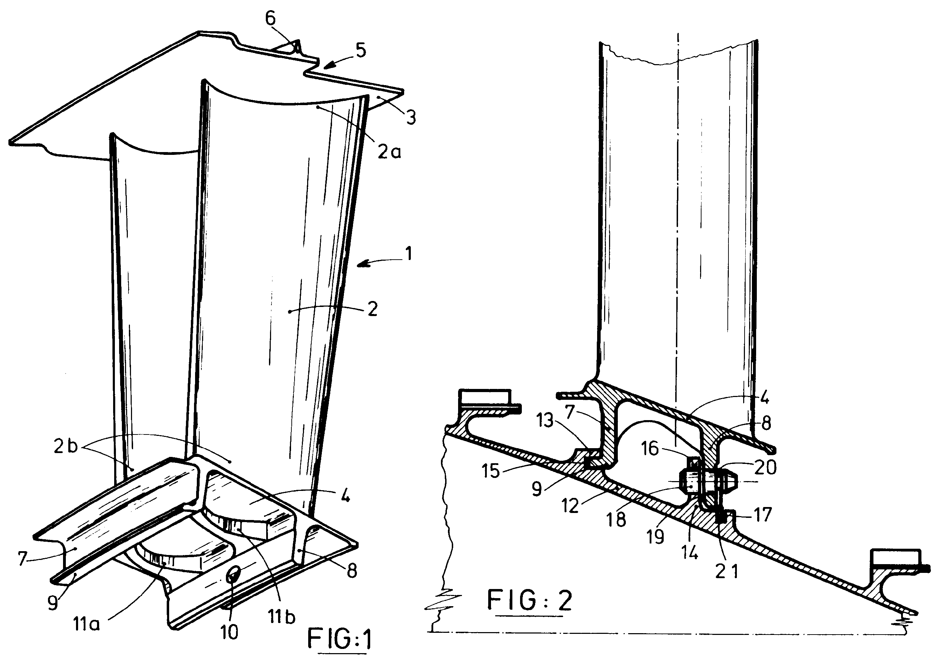

Dans l'exemple représenté aux dessins d'un premier mode de réalisation d'un rotor de turbomachine conforme à l'invention, l'étage représenté d'aubes mobiles fixées sur le tambour du rotor est constitué de secteurs 1 de deux aubes, dont l'un est représenté sur la figure 1. Chaque secteur 1 comporte ainsi deux pales 2 d'aube, dont les extrémités radialement supérieures 2a sont réunies par un talon 3 commun et dont les extrémités radialement inférieures 2b sont supportées par une plate-forme 4 commune.

Les bords périphériques du talon 3 comportent une découpe en forme de Z 5, permettant aux talons adjacents de secteurs d'aubes de coopérer pour former une couronne radialement extérieure, à l'extrémité des aubes mobiles de rotor. Le talon 3 porte en outre sur sa face extérieure une léchette 6 orientée en direction radiale, périphériquement, présentant une section en forme de dent et qui assure l'étanchéité à la périphérie de l'aubage mobile en coopérant avec la surface interne correspondante, éventuellement munie d'une garniture d'étanchéité de type abradable, du carter enveloppant ledit aubage, comme ce mode de construction est en soi bien connu. Dans l'exemple représenté aux dessins, une léchette 6 unique est utilisée mais il peut y en avoir plusieurs. De manière remarquable, conforme à l'invention, la plate-forme 4 comporte sur sa face radialement inférieure, côté amont et côté aval, deux brides radiales, respectivement 7 et 8, disposées selon une direction périphérique. Ladite bride amont 7 se prolonge par un rebord, tourné vers l'avant et formant un crochet 9 et ladite bride aval 8 comporte en son milieu un perçage 10. Dans l'exemple représenté aux dessins, ladite face inférieure de la plate-forme 4 est renforcée par des nervures 11a, 11b, reliant la base desdites brides 7 et 8.

Dans ce premier mode de réalisation de l'invention, le tambour 12 de rotor dont la partie portant les secteurs 1 d'aubes qui viennent d'être décrits en référence à la figure 1 pour former un étage d'aubage mobile, destiné notamment dans l'exemple représenté aux dessins à constituer à plusieurs une turbine de puissance associée à un générateur de gaz et entraînant une hélice, non représentés aux dessins, est schématiquement représentée sur la figure 2. La surface extérieure dudit tambour 12 comporte au niveau dudit aubage deux brides radiales périphériques, longitudinalement espacées, respectivement 13 côté amont et 14 côté aval. La bride amont 13 comporte un évidement annulaire 15 ouvert du côté aval de manière à former en section un crochet. La bride aval 14 comporte une rangée de perçages 16 régulièrement espacés et, à sa base, une gorge annulaire 17.

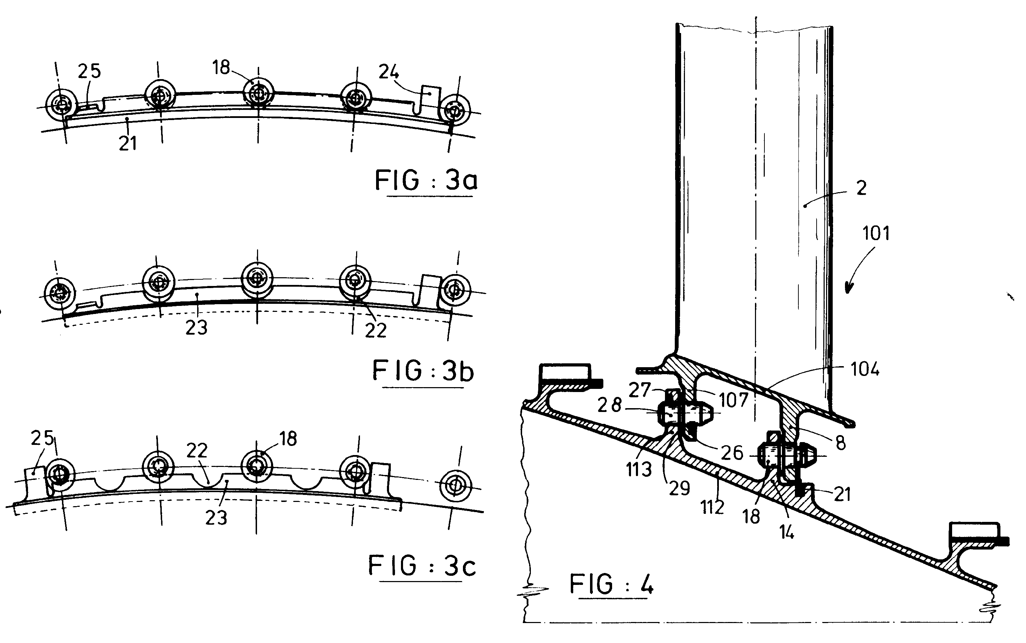

Le montage et la fixation des secteurs 1 d'aubes sur le tambour 12 de rotor sont effectués de la manière suivante. Un pion 18, de forme générale cylindrique, comportant, en son milieu, une collerette 19 transversale et, du côté aval, une gorge annulaire 20 est introduit, de l'aval vers l'amont, dans chacun des perçages 16 de la bride aval 14 du tambour 12, ladite collerette 19 venant en appui sur la face aval de ladite bride 14. Un secteur 1 d'aubes est présenté, en engageant le perçage 10 de la bride aval 8 de la plate-forme 4 d'aube sur ledit pion 18 puis le secteur 1 d'aubes est poussé vers l'amont, guidé par le pion 18, de manière à engager le crochet 9 de la bride amont 7 de la plate-forme 4 d'aube dans l'évidement 15 du crochet de la bride amont 13 du tambour 12 de rotor. Pour le verrouillage de l'ensemble, on utilise des segments festonnés 21 dont le montage est représenté plus en détails sur les figures 3a, 3b et 3c. Chaque segment festonné 21 comporte, sur son diamètre extérieur, des échancrures 22 en feston, séparées par des dents 23 et à chaque extrémité, une languette, l'une 24 droite et l'autre 25 pliée à angle droit. Le segment festonné 21 est présenté derrière les pions 18 et appuyé en butée sur la face aval de la bride aval 8 de la plate-forme 4 d'aube, les échancrures 22 se plaçant face aux pions 18, comme cela est visible sur la figure 3a. Puis le segment 21 est descendu radialement dans la gorge 17 du tambour 12 de rotor, comme cela est visible sur la figure 3b. Enfin, on fait coulisser le segment 21 dans le sens périphérique jusqu'à ce que les dents 23 se logent dans les gorges 20 des pions 18, puis la languette 25 est redressée, de manière à obtenir ainsi un verrouillage radial des segments 21 et un verrouillage axial des secteurs 1 d'aubes, cette dernière étape étant représentée sur la figure 3c et correspondant au montage final représenté sur la figure 2. Le pion 18 assure également l'anti-rotation des secteurs 1 d'aubes. Un autre avantage de la disposition qui vient d'être décrite réside dans la stabilité procurée par la longueur relative importante du guidage périphérique du secteur 1 d'aubes obtenu par le crochet 9 de la bride amont 7 de la plate-forme 4 d'aube.

L'invention est cependant susceptible d'autres modes de réalisation qui peuvent être préférés suivant les conditions particulières des applications concernées. On a ainsi représenté aux dessins, sur les figures 4 à 6, un deuxième mode de réalisation de l'invention selon lequel les moyens de fixation d'un secteur d'aubes sur le tambour 112 de rotor sont indentiques du côté aval et on conservera les même références que pour le premier mode de réalisaaion précédemment décrit en référence aux figures 1 à 3 pour désigner les brides aval, respectivement 8 de la plate-forme 104 d'aube et 14 du tambour 112 de rotor, les pions 18 et les segments festonnés 21 mais, par contre, on utilisera une référence augmentée d'une centaine pour désigner des éléments différents dans le deuxième mode de réalisation. Ces différences concernent principalement les moyens de fixation utilisés du côté amont. La plate-forme 104 d'aube comporte, comme précédemment, une bride radiale amont 107 qui, de manière particulière propre au deuxième mode, comporte en son milieu un perçage 26, de manière semblable à la bride aval 8. De même, le tambour 112 de rotor conserve une bride amont 113 qui, maintenant et comme la bride aval 14 de tambour, comporte une rangée de perçages 27, régulièrement espacés. Les perçages coopérants correspondants 26 et 27 sont traversés par un pion 28, de forme générale cylindrique, analogue au pion 18 placé du côté aval, comportant également, en son milieu, une collerette transversale 29 qui vient s'intercaler entre les deux brides amont coopérantes, 107 de plate-forme d'aube et 113 de tambour de rotor mais ne comportant pas de gorge, du côté aval.

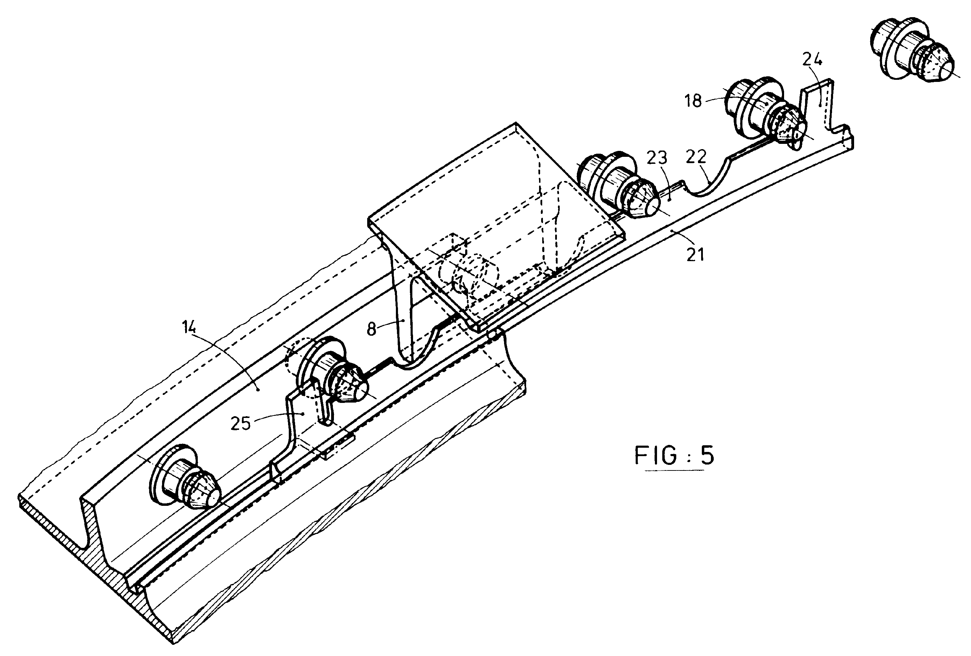

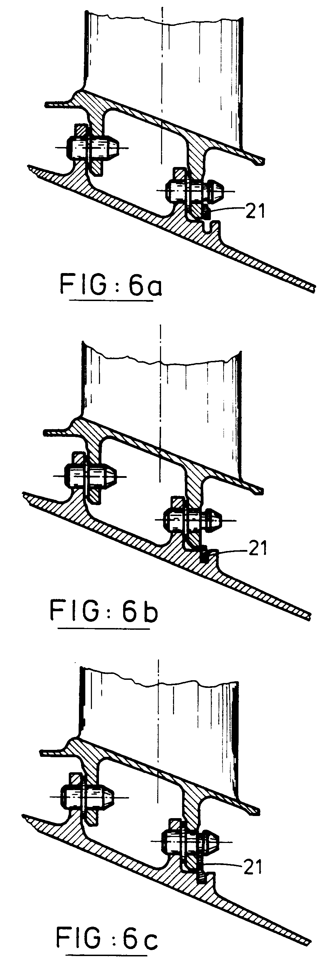

Le mode de montage de l'étage d'aubage mobile de rotor suivant le deuxième mode de réalisation qui vient d'être décrit est similaire à celui de l'aubage suivant le premier mode précédemment décrit, en référence aux figures 1 à 3 et plus particulièrement les étapes du montage suivant les figures 3a, 3b et 3c. Comme précédemment, on dispose les pions 18 et on dispose également les pions 28 introduits, de manière similaire, de l'aval vers l'amont, dans les perçages 27 de la bride amont 113 du tambour 112 de rotor, la collerette 29 de pion venant en appui sur la face aval de ladite bride 113. Un secteur 101 d'aubes est alors présenté, la bride amont 107 de plate-forme 104 d'aube étant insérée entre les brides 113 et 14 de tambour puis le secteur d'aubes est poussé vers l'amont de manière à faire pénétrer les pions, respectivement 28 et 18 dans les perçages, respectivement 26 et 10 des brides amont 107 et aval 8 de la plate-forme 104 d'aube. Le montage des segments festonnés 21 est alors identique à celui qui a été décrit précédemment pour le premier mode de réalisation. Les détails agrandis du positionnement des pions 18, d'un segment festonné 21, des brides aval respectivement 8 de plate-forme d'aube et 14 de tambour sont représentés en perspective sur la figure 5 et les figures 6a, 6b et 6c montrent les étapes du montage des segments festonnés 21 dans le deuxième mode de réalisation de l'invention, chaque figure présentant respectivement une vue en coupe des précédentes figures 3a, 3b et 3c.

Bien entendu, l'invention a été décrite dans des exemples de réalisation où les secteurs comportent deux aubes mais elle est directement applicable à toutes les applications de fixation d'aubes de rotor, que les aubes soient fixées individuellement, chaque plate-forme étant associée à une pale unique d'aube, ou que les secteurs comportent un nombre différent d'aubes.

## Revendications

1. Rotor de turbomachine constitué d'un tambour (12 ; 112) comportant au moins deux brides (13,14 ; 113) orientées radialement vers l'extérieur et axialement espacées l'une de l'autre, chaque bride de tambour coopérant avec une pluralité de brides radiales (7,8 ; 107) solidaires d'une plate-forme (4 ; 104) d'aube, pendant que la bride (14) de tambour située du côté aval comporte une rangée de perçages (16) régulièrement espacés, pendant que chaque bride radiale aval (8) coopérante de plate-forme d'aube comporte également un perçage (10), pendant que lesdits perçages coopérants (16,10) sont traversés par un pion aval (18) de forme générale cylindrique caractérisé en ce que la bride aval (14) comporte, à sa base, une gorge annulaire (17), en ce que le pion aval (18) comporte, en son milieu, une collerette (19) transversale intercalée entre les deuxdites brides aval (8,14) et, du côté aval, une gorge annulaire (20), et en ce que des segments festonnés (21) ayant leur base radialement inférieure placée dans ladite gorge annulaire (17) de bride, ont une de leurs dents (23) séparant deux échancrures (22) logée dans ladite gorge (20) de pion et portent à chacune de leurs extrémités une languette (24, 25), l'une (24) droite, l'autre (25) pliée à angle droit, de manière à assurer la rétention radiale, axiale et tangentielle des aubes de rotor, desdits pions et desdits segments et, par redressage de cette dernière languette (25) derrière un desdits pions, le verrouillage de l'ensemble.

2. Rotor de turbomachine selon la revendication 1 dans lequel chaque plate-forme (4 ; 104) d'aube porte deux pales (2) d'aube périphériquement espacées dont les extrémités radialement externes sont réunies par un talon (3) commun dont les bords périphériques comportent une découpe en forme de Z (5) et dont la face extérieure porte au moins une léchette (6) d'étanchéité, l'ensemble constituant un secteur (1) d'aubes de rotor.

3. Rotor de turbomachine selon l'une des revendications 1 ou 2 dans lequel la bride (13) de tambour située du côté amont comporte un évidement (15) annulaire formant une section en crochet coopérant avec un crochet (9) orienté vers l'avant et porté par la bride amont (7) de plate-forme d'aube.

4. Rotor de turbomachine selon l'une des revendications 1 ou 2 dans lequel la bride amont (113) de tambour comporte une rangée de perçages (27) régulièrement espacés et la bride amont (107) coopérante de plate-forme d'aube comporte également un perçage (26), les deux perçages correspondants (27,26) respectivement de tambour (112) et de plate-forme (104) d'aube, recevant un pion amont (28) de forme générale cylindrique, qui comporte en son milieu une collerette (29) transversale, intercalée entre les deux dites brides amont (113, 107).

**Patentansprüche**

1. Turbomaschinen-Rotor, bestehend aus einer Trommel (12; 112) mit wenigstens zwei Flanschen (13, 14; 113), die radial nach außen gerichtet sind und in axialer Richtung Abstand voneinander haben und von denen jeder mit mehreren radialen Flanschen (7, 8; 107) zusammenwirkt, die fest mit einer Schaufelplattform (4; 104) verbunden sind, wobei der auf der stromabwärtigen Seite liegende Trommelflansch (14) eine Reihe von in gleichen Abständen angeordneten Öffnungen (16) besitzt und jeder der zusammenwirkenden, stromabwärtigen radialen Schaufelplattformflansche (8) gleichfalls eine Öffnung (10) besitzt und die zusammenwirkenden Öffnungen (16, 10) von einem stromabwärtigen Metallstück (18) von im wesentlichen zylindrischer Form durchdrungen sind, **dadurch gekennzeichnet,** daß der stromabwärtige Trommelflansch (14) an seiner Basis eine ringförmige Kehle (17) aufweist, daß das stromabwärtige Metallstück (18) in seiner Mitte einen zwischen den beiden stromabwärtigen Flanschen (8, 18) eingesetzten transversalen Kragen (19) und auf seiner stromabwärtigen Seite eine ringförmige Kehle (20) aufweist, und daß girlandenförmige Segmente (21), die mit ihrer in radialer Richtung unteren Basis in der ringförmigen Kehle (17) des Flansches angeordnet sind, mit einem ihrer jeweils zwei bogenförmige Aussparungen (22) voneinander trennenden Zähne (23) in der Kehle (20) eines der Metallstücke aufgenommen sind und an jedem ihrer Enden eine Zunge (24, 25) tragen, von denen die eine (24) gerade und die andere (25) rechtwinklig gebogen ist, derart daß sie die radiale, die axiale und die tangentiale Halterung der Rotorschaufel, der Metallstücke und der Segmente und, durch Geradebiegen der letztgenannten Zunge (25) hinter einem der Metallstücke, die Verriegelung der ganzen Baueinheit sichern.

2. Turbomaschinen-Rotor nach Anspruch 1, bei dem jede Schaufelplattform (4; 104) zwei in Umfangsrichtung voneinander beabstandete Schaufelblätter (2) trägt, deren radial äußeren Enden durch einen gemeinsamen Steg (3) miteinander verbunden sind, dessen periphere Ränder eine Z-förmige Aussparung (5) besitzen und dessen Außenseite wenigstens eine Dichtungszunge (6) trägt, wobei diese Baugruppe insgesamt einen Schaufelsektor des Rotors bildet.

3. Turbomaschinen-Rotor nach Anspruch 1 oder 2, bei dem der auf der stromaufwärtigen Seite liegende Trommelflansch (13) eine ringförmige Vertiefung (15) besitzt, die einen Hakenabschnitt bildet, der mit einem nach vorn weisenden, von dem stromaufwärtigen Schaufelplattformflansch (7) getragenen Haken (9) zusammenwirkt.

4. Turbomaschinen-Rotor nach Anspruch 1 oder 2, bei dem der stromaufwärtige Trommelflansch (13) eine Reihe von in gleichen Abständen angeordneten Öffnungen (27) besitzt und der mit ihm zusammenwirkende Schaufelplattformflansch (7) ebenfalls eine Öffnung (26) besitzt, wobei die beiden korrespondierenden Öffnungen (27, 26) der Trommel (112) bzw. der Schaufelplattform (104) ein im wesentlichen zylindrisches Metallstück (28) aufnehmen, das in seiner Mitte einen transversalen Kragen (20) aufweist, der zwischen die beiden stromaufwärtigen Flansche (113, 107) eingesetzt ist.

**Claims**

1. Turbo-machine rotor consisting of a drum (12; 112) having at least two flanges (13, 14; 113) directed radially outwards and spaced apart from each other axially, each drum flange interacting with a plurality of radial flanges (7, 8; 107) integral with a blade platform (4; 104), whilst the drum flange (14) situated on the downstream side has a row of regularly-spaced pierced holes (16), whilst each interacting, downstream radial flange (8) of a blade platform also has a pierced hole (10), whilst the said interacting pierced holes (16, 10) are traversed by a downstream pin (18) of a cylindrical general shape, characterised in that the downstream flange (14) has, at its base, an annular throat (17), in that the downstream pin (18) has, at its centre, a transverse collar (19) inserted between the two said downstream flanges (8, 14) and, on the downstream side, an annular throat (20), and in that scalloped segments (21), having their radially lower base placed in the said annular throat (17) of the flange, have one of their teeth (23), separating two notches (22), housed in the said throat (20) of the pin, and carry at each of their ends a tongue (24, 25), one (24) straight and the other (25) bent at right angles, in order to effect the radial, axial and tangential retention of the rotor blades, of the said pins and of the said serpents and, by straightening this latter tongue (25) behind one of the said pins, the locking of the assembly.

2. Turbo-machine rotor according to Claim 1, in which each blade platform (4; 104) carries two peripherally-spaced blade vanes (2), the radially outer ends of which are joined by a common end piece (3), the peripheral edges of which have a Z-shaped cutaway (5), and the outer face of which carries at least one sealing lip (6), the assembly constituting a rotor blade sector (1).

3. Turbo-machine rotor according to either of Claims 1 and 2, in which the drum flange (13) situated on the upstream side has an annular recess (15) forming a hook section interacting with a hook (9) pointing forwards and carried by the upstream flange (7) of a blade platform.

4. Turbo-machine rotor according to either of Claims 1 and 2, in which the upstream drum flange (113) comprises a row of radially-spaced pierced holes (27), and the interacting upstream flange (107) of a blade platform also has a pierced hole (26), the two corresponding pierced holes (27, 26) of, respectively, the drum (112) and blade platform (104) receiving an upstream pin (28), of a cylindrical general shape, which has at its centre a transverse collar (29) inserted between the two said upstream flanges (113, 107).

FIG:2

FIG:1

FIG : 3a

FIG : 3b

FIG : 3c

FIG : 4

EP 0 363 280 B1

FIG : 5

FIG : 6a

21

FIG : 6 b

21

FIG : 6 c

21